# EUROPEAN PATENT SPECIFICATION

(11) **EP 0 958 993 B1**
(45) Date of publication and mention of the grant of the patent: **22.11.2006**
(21) Application number: 98900729.9
(22) Date of filing: 22.01.1998
(51) Int. Cl.: B62D 21/18, B62D 25/00, B62D 25/22, B62D 49/06

(54) **SMALL-SIZED PASSENGER WORK VEHICLE**
KLEINES ARBEITSFAHRZEUG MIT EINEM FAHRER
VEHICULE DE TRAVAIL DE PETITE DIMENSION A UN SEUL PASSAGER

(30) Priority: 10.02.1997 JP 2675297; 16.05.1997 JP 12767297
(43) Date of publication of application: 24.11.1999
(73) Proprietor: YANMAR AGRICULTURAL EQUIPMENT Co., Ltd., Osaka-fu 530-0013 (JP); SEIREI INDUSTRY CO., LTD., Okayama-ken 702-8004 (JP)
(72) Inventor: MATSUOKA, Hideki, Yanmar Agricultural, Osaka-shi, Osaka 530-0013 (JP); KANOH, Kenshiro, Okayama-shi, Okayama 702-8004 (JP); UEMURA, Masamitsu, Okayama-shi, Okayama 702-8004 (JP)
(74) Representative: Bertrand, Didier
(86) International application number: PCT/JP1998/000287
(87) International publication number: WO 1998/034828

(56) References cited:
- EP-A- 0 858 727
- FR-A- 2 661 882
- JP-A- 4 008 675
- JP-A- 4 166 476
- JP-A- 8 034 364
- JP-B- 4 071 743

## Description

### TECHNINCAL FIELD

The present invention relates to a small-sized passenger work vehicle that can ensure safety of an operator.

### BACKGROUND TECHNOLOGY

Hitherto, there is known a small-sized passenger work vehicle of a type wherein front wheels in a left and right pair are mounted on main frames in a left and right pair extending in a front and rear direction through a front wheel transmission case, wherein rear wheels in a left and right pair are mounted on main frames in a left and right pair extending in a front and rear direction through a rear wheel transmission case, and wherein an operation section, an engine and a suspension case are supported by the main frames.

The operation section is provided with a variety of operating levers on left and right sides of a seat.

The small-sized passenger work vehicle of the type as described above, however, still has the problems that remain unsolved yet.
(1) For instance, when agricultural work is carried out at an agricultural field in a mountainous area, there are many occasions that the small-sized passenger work vehicle has to be operated on a narrow road having the ups and downs in order to transfer a one agricultural field to another. When the small-sized passenger work vehicle runs on a descent road, on the one hand, the operator cannot brace its legs if the step surface would be disposed parallel to the road surface and the operator feels frightened as if fallen off from the seat of the vehicle. When the small-sized passenger work vehicle runs on an ascent road, on the other hand, the operator feels frightened if there would be a protective member at the back.
(2) When the small-sized passenger work vehicle is operated to carry out work in an orchard or other agricultural fields, a plowing machine is connected to the small-sized passenger work vehicle at its back and the small-sized passenger work vehicle runs among trees or the like in order to cultivate the field or to weed out the field. There may be the occasion that the outer side edge portion of the small-sized passenger work vehicle is caused to come into contact with the trees and damage them.
(3) For instance, when agricultural work is carried out with the small-sized passenger work vehicle on terraced fields in a mountainous region, the work often has to be conducted on a sloping field while the operator holds the steering wheel of the operation section in one hand and the operating lever in the other. During the agricultural operation, the vehicle body of the small-sized passenger work vehicle may be shaken and inclined greatly and the operator may be caused to fall off the operator's seat.
   At this time, there may be the occasion that the operator cannot afford to let go its hold of the operating lever and hold the steering wheel, whereby the operator may feel frightened.
(4) A heavy member such as an engine portion and a transmission portion is disposed at the rear of the vehicle body of the small-sized passenger work vehicle, so that the position of gravity of the vehicle body is somewhat deviated toward the rear portion of the vehicle body and as a result balance between the front and rear portions of the vehicle body is not so good that operability of the vehicle body and stability in running the vehicle may be impaired.

In particular, when a variety of work is to be carried out by connecting a plowing machine or other working machines to the rear portion of the vehicle body of the small-sized passenger work vehicle, the position of gravity of the vehicle body is further deviated farther toward the rear portion of the vehicle. As a consequence, there may be the risk that the front portion of the vehicle body may be caused to be lifted up so that work cannot be done in a smooth way and workability of various work can be reduced.

The present invention has the object to provide a small-sized passenger work vehicle that can solve the various problems as described above.

An example of a small works vehicle is shown in JP4166476.

An example of a work vehicle comprising frame members and a subframe is shown in US4266629.

A small work vehicle is also shown in colliding document EP0858727.

### DISCLOSURE OF THE INVENTION

The present invention relates to a small-sized passenger work vehicle which is characterized as per Claim 1.

### BRIEF DESCRIPTION OF THE DRAWINGS

Figure 1 is a side view showing a small-sized passenger work vehicle according to a first embodiment of the present invention.
Figure 2 is a plan view showing the small-sized passenger work vehicle according to the first embodiment of the present invention.
Figure 3 is a front view showing the small-sized passenger work vehicle according to the first embodiment thereof.

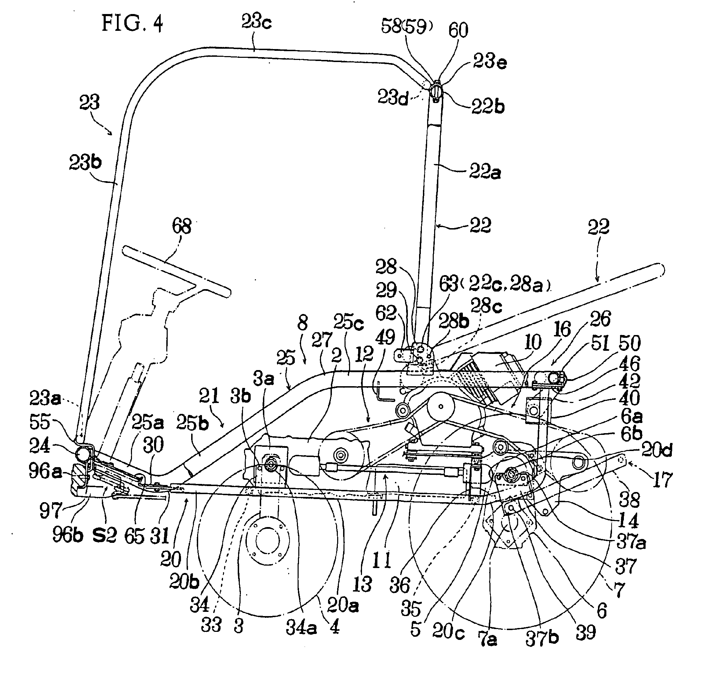

Figure 4 is a partially cut-away side view showing a frame of the vehicle body of the small-sized passenger work vehicle according to the first embodiment thereof

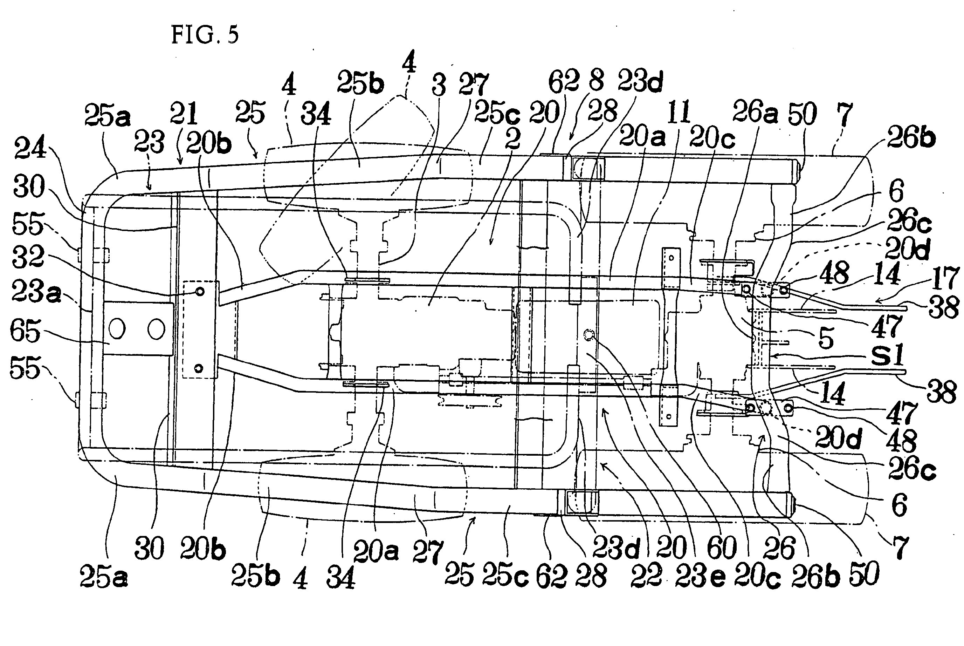

Figure 5 is a plan view showing the frame of the vehicle body thereof.

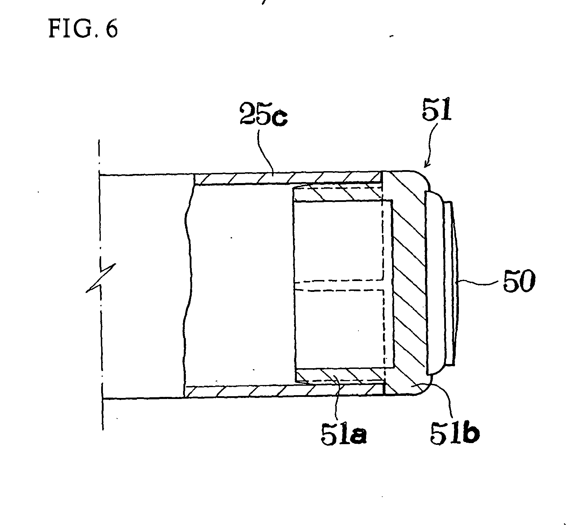

Figure 6 is a side view in section showing a reflector.

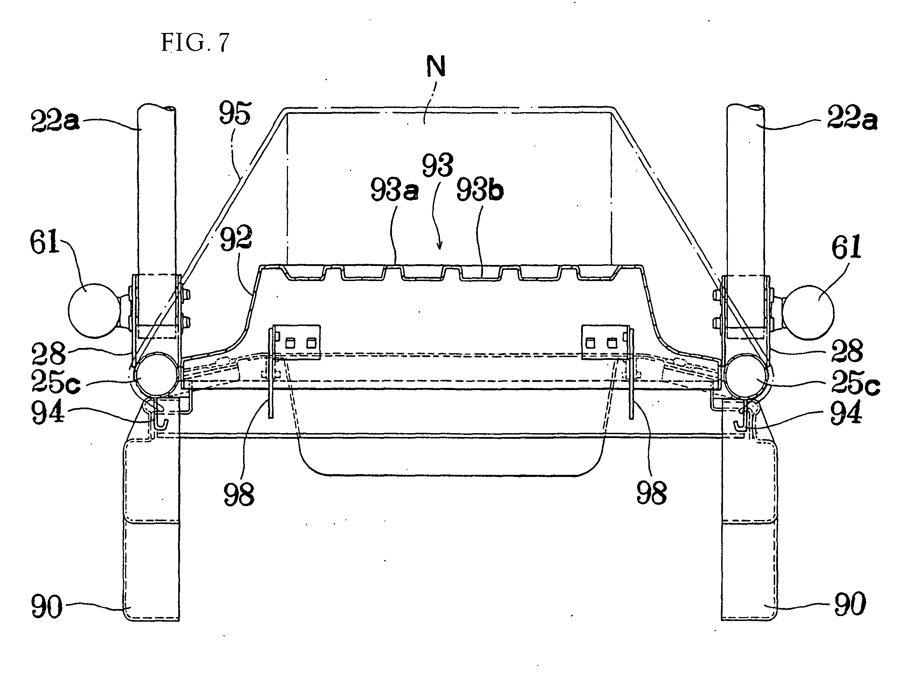

Figure 7 is a side view showing a bonnet.

### BEST MODES OF CARRYING OUT THE INVENTION

The present invention will be described in more detail with reference to the accompanying drawings.

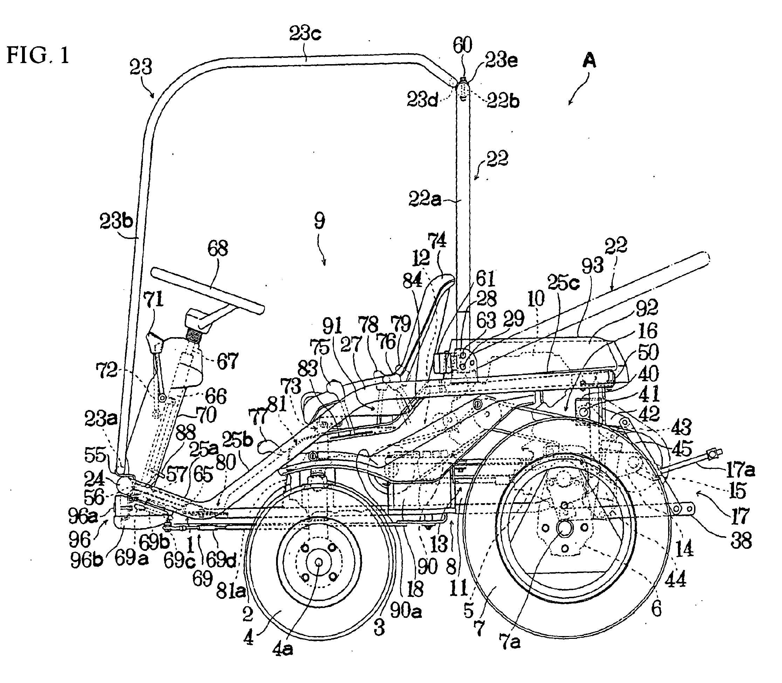

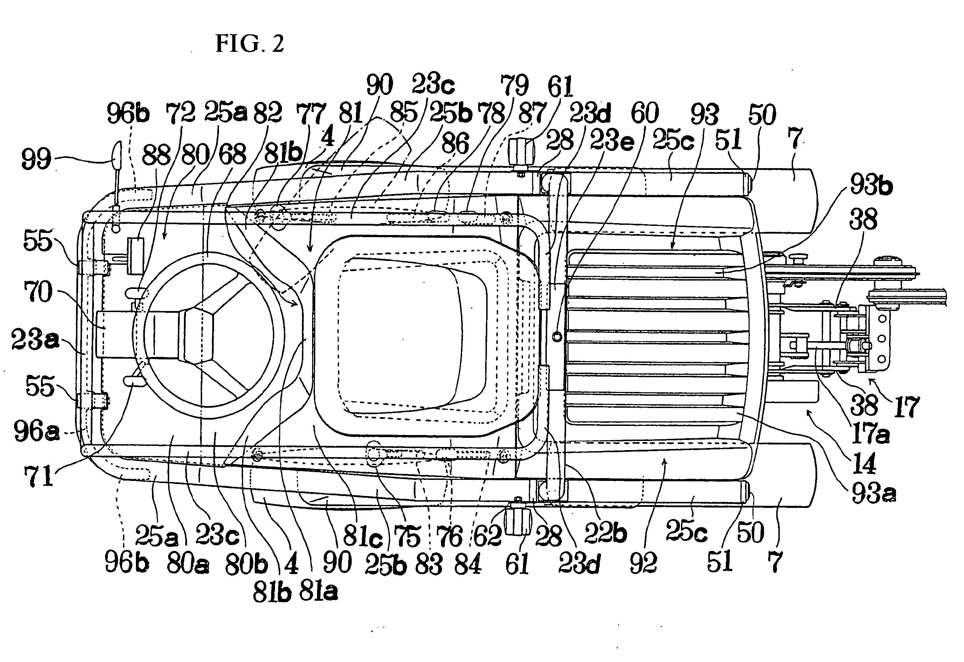

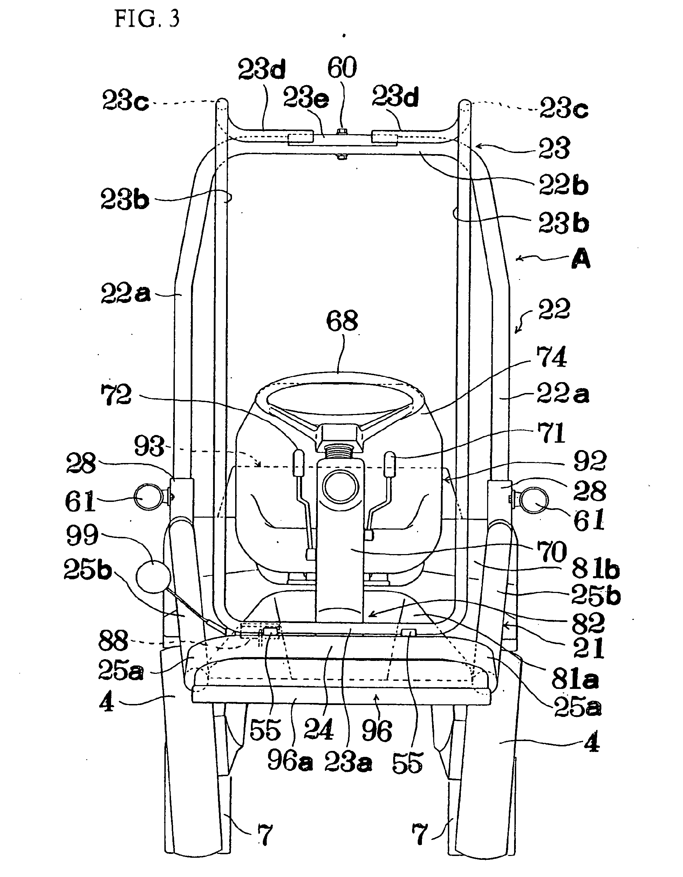

As shown in Figures 1 to 3, reference symbol "A" stands for a small-sized passenger work vehicle according to the first embodiment of the present invention. The small-sized passenger work vehicle A comprises a vehicle body frame 1, a suspension case 2 disposed in a nearly central portion on the vehicle body frame 1, front wheel transmission cases 3 and 3 coupled to the left and right sides of the suspension case 2, respectively, front wheels 4 and 4 mounted on the respective front wheel transmission cases 3 and 3 through front wheel shafts 4a and 4a, a rear wheel center transmission case 5 disposed at the rear portion on the vehicle body left and right side forming sections 96b and 96b disposed extending in a rearward direction along the left and right side leg-bracing surface forming sections25a and 25a from the left and right side ends of the front side forming section 96a. The front weight portion 96 is in a generally squared C-shaped form and can also function as a bumper.

Furthermore, the front weight portion 96 is disposed to cover a lower clearance S2 in the form of a right-angled triangle, when viewed from the side, formed immediately below the leg-bracing surface section 80a, from the front side and the left and right sides.

In the clearance S2 disposed immediately below the leg-bracing surface section 80a, there is disposed a portion of the wheel steering mechanism 69, that is, a pinion gear 69a mounted on the bottom end of the steering wheel support shaft 67, a sector gear 69b disposed so as to engage with the pinion gear 69a, and a steering arm 69c connected to the sector gear 69b and supported by the steering wheel post support member 65. In the drawings, reference symbol 69d stands for a drag rod.

With the construction as described above, the disposition of a portion of the wheel steering mechanism 69 in the clearance S2 can provide a large height clearance above the ground for disposing a portion of the wheel steering mechanism 69, thereby protecting the wheel steering mechanism 69 from being damaged by impact with scattering stones, projections from the ground or otherwise.

Further, the front side portion and the left and right side portions of the wheel steering mechanism 69 are covered with the front weight portion 96, so that the wheel steering mechanism 69 can be protected from damages for sure.

In addition, the front weight portion 96 can ensure a good balance between the front and rear portions of the vehicle body, thereby ensuring stability in driving performance and workability in an agricultural field.

### INDUSTRIAL UTILIZABILITY

The present invention can offer the features and advantages as will be described hereinafter.
(1) The small-sized passenger work vehicle according to the present invention is configured such that the sub-frame mounted on the main frame comprises the front side frame forming member extending in a lateral widthwise direction, and the left and right side frame forming members each extending in a rearward direction from the left and right sides of the front side frame forming member, respectively, so that the sub-frame constitutes an outer body framework of the vehicle body and functions as a guard frame or a partition frame.
   Further, each of the leg-bracing surface forming sections is provided with the leg-bracing surface section, so that the operator can brace its legs by placing the leg-bracing surface sections while running the vehicle on a road or a field inclining downwardly. Therefore, the operator does not feel any fear of falling down from the vehicle even while running in a downwardly inclining field or road.
(2) For the small-sized passenger work vehicle according to the present invention, the left and right side frame forming members are disposed in the positions immediately above the front wheels and the rear wheels, so that the vehicle does not damage trees such as fruit trees or otherwise while running among such trees, even if the pipes forming the left and right side frames would come into contact with the trees. Therefore, the vehicle can protect the trees from being damaged by impact or otherwise during agricultural work, and it can protect the operator, too, because the left and right side frame forming members can work as guard frames.
(3) The small-sized passenger work vehicle according to the present invention is configured such that a connection portion between side inclination section and the rearward extension inclination section of each of the left and right side frame forming members is formed as a curved portion that can work as a gripping portion, and that the gripping portion is disposed on the side next to the seat of the operation section. Therefore, when the operator rides or get off the vehicle, the operator can grip the gripping portion and ride or get off the operation section easily.
(4) For the small-sized passenger work vehicle according to the present invention, the various operating levers are disposed inside the gripping portion, so that the operator can hold the gripping portion immediately and support the body for certainty if the operator would feel danger during operating the levers. This configuration of the vehicle can ensure safety from sliding down from the seat and falling off from the vehicle.
(5) As the small-sized passenger work vehicle according to the present invention is configured such that the side cover member is disposed to extend between the side inclination section and the rearward extension section of the sub-frame and the intermediate portion of the sub-frame is curved in a downwardly depressed form to form a clearance for the gripping portion between the intermediate portion thereof and the gripping portion, the operator can grip the gripping portion easily by the aid of the clearance.

## Claims

1. A small-sized passenger work vehicle **characterized in that** :
front wheels (4,4) in a left and right pair and rear wheels (7,7) in a left and right pair are mounted on main frames (20, 20) in a left and right pair each extending in a front and rear direction, respectively, and a seat (74) is disposed in an operation section (9) so as to be located between the front wheels (4, 4) and the rear wheels (7, 7) ;
a sub-frame (21) is mounted on the main frames (20, 20), and the subframe (21) comprises a front side frame forming member (24) extending in a lateral widthwise direction, and left and right side frames forming members (25, 25) each extending in a rearward direction from the left and right side ends of the front side frame forming member (24), respectively ; and
the left and right side frame forming members (25, 25) comprises, respectively, left and right side leg-bracing surface forming sections (25a, 25a) disposed each inclining in a rearward and downward direction from the front ends thereof, side inclination sections (25b, 25b) disposed each inclining upwardly in a rearward from the respective left and right side leg-bracing surface forming sections (25a, 25a) to the sides of the seat (74), and rearward extension sections (25c, 25c) each extending rearward in a generally horizontal direction from the top ends of the side inclination sections (25b, 25b), wherein gripping portions (27, 27) are disposed in the vicinity of connection portions between the side inclination sections (25b, 25b) and the rearward extension sections (25c, 25c), respectively, and each of the gripping portions (27, 27) is disposed on the side next to the seat (74) in the operation section (9), and wherein a side cover member (90) is disposed over an entire length between the side extension section (25b) and the rearward extension section (25c) of the sub-frame (21) ; and an intermediate portion (90a) of the side cover member (90) is shaped in a downwardly depressed form so as to constitute a clearance (91) for a gripping portion between the intermediate portion (90a) and the gripping portion (27).

2. The small-sized passenger work vehicle as claimed in claim 1, wherein each of operating levers is disposed inside the gripping portions (27, 27).

## Patentansprüche

1. Kleines Arbeitsfahrzeug mit einem Fahrer, **dadurch gekennzeichnet, daß**:
vordere Räder (4, 4) in einem linken und rechten Paar und rückwärtige Räder (7, 7) in einem linken und rechten Paar auf Hauptrahmen (20, 20) in einem linken und
rechten Paar montiert sind, das sich jeweils in einer vorderen bzw. rückwärtigen Richtung erstreckt, und ein Sitz (74) in einem Betätigungsabschnitt (9) so angeordnet ist, um zwischen den Vorderrädern (4, 4) und den rückwärtigen Rädern (7, 7) angeordnet zu sein;
einen Hilfs- bzw. Sub-Rahmen (21) an den Hauptrahmen (20, 20) festgelegt bzw. montiert ist, und der Sub-Rahmen (21) ein einen Vorderseitenrahmen bildendes Glied (24), das sich in einer seitlichen Breitenrichtung erstreckt, und linke und rechte Seitenrahmen ausbildende Glieder (25, 25) umfaßt, die sich jeweils in einer rückwärts gerichteten Richtung von dem linken und rechten Seitenende des einen vorderen Seitenrahmen ausbildenden Glieds (24) erstrecken; und
die linken und rechten Seitenrahmen bildenden Glieder (25, 25) jeweils linke und rechte Seitenschenkel versteifende Oberflächen bildende Abschnitte (25a, 25a), die sich jeweils in einer nach rückwärts und nach unten verlaufenden Richtung von den vorderen Enden derselben neigend angeordnet sind, Seitenneigeabschnitte (25b, 25b), die sich jeweils nach oben neigend in einer Rückwärtsrichtung von den entsprechenden, die linken und rechten Seitenschenkel versteifenden Oberflächen ausbildenden Abschnitten (25a, 25a) zu den Seiten des Sitzes (74) angeordnet sind, und rückwärtige Erstreckungsabschnitte (25c, 25c) umfassen, die sich jeweils nach rückwärts in einer allgemein horizontalen Richtung von den oberen Enden der Seitenneigeabschnitte (25b, 25b) erstrecken, wobei ergreifende bzw. Greifabschnitte (27, 27) jeweils in der Nachbarschaft von Verbindungsabschnitten zwischen den Seitenneigeabschnitten (25b, 25b) und den rückwärtigen Erstreckungsabschnitten (25c, 25c) angeordnet sind, und jeder der Greifabschnitte (27, 27) an der Seite nahe dem Sitz (74) in dem Betätigungsabschnitt (9) angeordnet ist, und wobei ein Seitenabdeckungsglied (90) über eine gesamte Länge zwischen dem Seitenerstreckungsabschnitt (25b) und dem rückwärtigen Erstreckungsabschnitt (25c) des Sub-Rahmens (21) angeordnet ist; und ein zwischenliegender Abschnitt (90a) des Seitenabdeckungsglieds (90) in einer nach unten vertieften Form geformt ist, um ein Spiel (91) für einen Greifabschnitt zwischen dem zwischenliegenden Abschnitt (90a) und dem Greifabschnitt (27) auszubilden.

2. Kleines Arbeitsfahrzeug mit einem Fahrer nach Anspruch 1, wobei jeder der Betätigungshebel im Inneren der Greifabschnitte (27, 27) angeordnet ist.

## Revendications

1. Véhicule de travail de petite dimension à un seul passager **caractérisé en ce que** :
des roues avant (4, 4) dans une paire gauche et droite et des roues arrière (7, 7) dans une paire gauche et droite sont montées sur des châssis principaux (20, 20) dans une paire gauche et droite chacune s'étendant suivant une direction avant et arrière, respectivement, et un siège (74) est disposé dans une section fonctionnelle (9) de façon à être situé entre les roues avant (4, 4) et les roues arrière (7, 7) ;
un sous-châssis (21) est monté sur les châssis principaux (20, 20) et le sous-châssis (21) comprend un élément formant un châssis latéral avant (24) s'étendant dans le sens de la largeur latérale et des éléments gauche et droit formant des châssis latéraux (25, 25) s'étendant chacun suivant une direction vers l'arrière à partir des extrémités latérales gauche et droite de l'élément formant un châssis latéral avant (24), respectivement ; et
les éléments gauche et droit formant des châssis latéraux (25, 25) comprennent, respectivement, des sections de formation de surface de renfort de pattes latérales gauche et droite (25a, 25a) disposée chacune de manière inclinée suivant une direction vers l'avant et vers l'arrière à partir de leurs extrémités avant, des sections d'inclinaison latérales (25b, 25b) disposée chacune de manière à s'incliner vers le haut et vers l'arrière, des sections de formation de surface de renfort de pattes latérales gauche et droite respectives (25a, 25a) jusqu'au côtés du siège (74) et des sections d'extension vers l'arrière (25c, 25c) s'étendant chacune vers l'arrière suivant une direction généralement horizontale à partir des extrémités supérieures des sections d'inclinaison latérales (25b, 25b), dans lequel des parties de prise (27, 27) sont disposées à proximité des parties de connexion entre les sections d'inclinaison latérales (25b, 25b) et les sections d'extension vers l'arrière (25c, 25c), respectivement, et chacune des parties de prise (27, 27) est disposée sur le côté à côté du siège (74) dans la section fonctionnelle (9), et dans lequel un élément de couverture latéral (90) est disposé sur toute la longueur entre la section d'extension latérale (25b) et la section d'extension vers l'arrière (25c) du sous-châssis (21) ; et une partie intermédiaire (90a) de l'élément de couverture latéral (90) est formée dans une forme diminuant vers le bas de façon à constituer un espace (91) pour une partie de prise entre la partie intermédiaire (90a) et la partie de prise (27).

2. Véhicule de travail de petite dimension à un seul passager selon la revendication 1, dans lequel chacun des leviers de fonctionnement est disposé à l'intérieur des parties de prise (27, 27).
